# FASCICULE DE BREVET EUROPEEN

(11) **EP 0 478 421 B1**
(45) Date de publication et mention de la délivrance du brevet: **02.03.1994**
(21) Numéro de dépôt: 91402492.2
(22) Date de dépôt: 19.09.1991
(51) Int. Cl.: F16J 15/40, F17B 1/06, G01F 25/00

(54) **Dispositif d'étanchéité à joint fluide**
Dichtungsvorrichtung mit eine Flüssigkeitsdichtung
Sealing device with a liquid seal

(30) Priorité: 28.09.1990 FR 9011953
(43) Date de publication de la demande: 01.04.1992
(73) Titulaire: SCHLUMBERGER INDUSTRIES, S.A., Montornes del Valles (Barcelona) (ES)
(72) Inventeur: Vinals, Manuel, San Quirze Del Valles (ES)
(74) Mandataire: Bentz, Jean-Paul

(56) Documents cités:
- FR-A- 2 275 709
- SU-A- 614 331
- US-A- 2 927 829
- US-A- 3 125 879
- US-A- 4 307 601

## Description

La présente invention concerne un dispositif pour séparer l'un de l'autre un premier et un second volumes de fluide, comprenant un cylindre sensiblement vertical, un piston et un joint, le piston coulissant dans le cylindre pour délimiter, avec une partie inférieure de ce dernier, ledit premier volume de fluide, et le joint comprenant un liquide remplissant un espace annulaire formé entre le piston et le cylindre, en vue d'assurer une étanchéité au niveau de cet espace.

Un dispositif de ce genre est par exemple décrit dans le brevet canadien CA 1 123 792, plus précisément relatif à un joint au mercure destiné à être installé sur l'ouverture cylindrique d'une enceinte, de manière à obturer cette dernière de façon hermétique et éviter notamment le mélange des gaz respectivement présents dans l'enceinte et à l'extérieur de celle-ci.

Dans ce dispositif antérieur, le joint annulaire de mercure est confiné entre deux joints annulaires toriques en matériau élastomère, qui le maintiennent en place.

Cette solution, tout à fait envisageable lorsque le piston est monté à demeure dans le cylindre, présente des problèmes de fiabilité dès que le piston doit coulisser dans ce dernier, l'usure et la sollicitation des joints toriques risquant d'entraîner une fuite du liquide d'étanchéité, du mercure en l'occurrence.

Dans ce contexte, le but de la présente invention est de proposer un dispositif d'étanchéité plus fiable que celui du brevet précité, et notamment utilisable en toute sécurité lorsque la différence de pression entre les premier et second volumes évolue et/ou présente une valeur relativement élevée.

A cette fin, le dispositif de l'invention selon la revendication 1 est essentiellement caractérisé en ce que le piston présente une concavité s'ouvrant sur le premier volume de fluide, et en ce que ce piston comporte au moins un réservoir qui est soumis à la pression de ce premier volume de fluide, qui est logé dans ladite concavité, qui contient le liquide d'étanchéité, et qui communique librement avec ledit espace annulaire grâce à des orifices traversant le piston, le liquide adoptant ainsi, dans le réservoir d'une part, et dans l'espace annulaire d'autre part, des niveaux respectifs dont la différence est fonction de la différence des pressions régnant respectivement dans les premier et second volumes de fluide.

La propriété de cette disposition, selon laquelle la hauteur du joint de mercure s'adapte automatiquement à la différence des pressions respectives des premier et second volumes de fluide, permet notamment d'éviter l'inconvénient qu'aurait un joint de hauteur fixe de s'écouler par gravité dans le cas où la pression du volume inférieur serait trop faible, et de ne pouvoir résister à cette même pression dans le cas où elle serait trop forte.

Selon un mode de réalisation préféré, l'espace annulaire est spécialement aménagé par une conformation de la périphérie externe du piston, pratiquée sur une partie médiane de la hauteur de cette dernière, et les orifices traversant le piston débouchent à la base de cette partie médiane.

Compte tenu de la densité élevée du mercure, le liquide d'étanchéité utilisé est de préférence constitué par ce métal, mais est, en toute hypothèse, constitué par un liquide plus dense que chacun des deux fluides à séparer.

Afin d'assurer une meilleure répartition du liquide d'étanchéité, le réservoir contenant ce dernier est de préférence annulaire et communique avec l'espace annulaire à travers au moins deux orifices.

Grâce à ses performances en matière d'étanchéité, le dispositif de l'invention est idéalement applicable à la réalisation d'un gazomètre.

D'autres caractéristiques et avantages de l'invention ressortiront clairement de la description qui en est faite ci-après, à titre indicatif et nullement limitatif, en référence aux dessins annexés sur lesquels:
- La figure 1 est une vue en coupe d'un gazomètre réalisé conformément à l'invention;
- La figure 2 est une vue schématique partielle en coupe du piston du gazomètre de la figure 1, expliquant le principe de base de l'invention;
- La figure 3 est une vue en coupe du piston du gazomètre de la figure 1, sur laquelle sont représentés les détails de réalisation industrielle de ce piston.

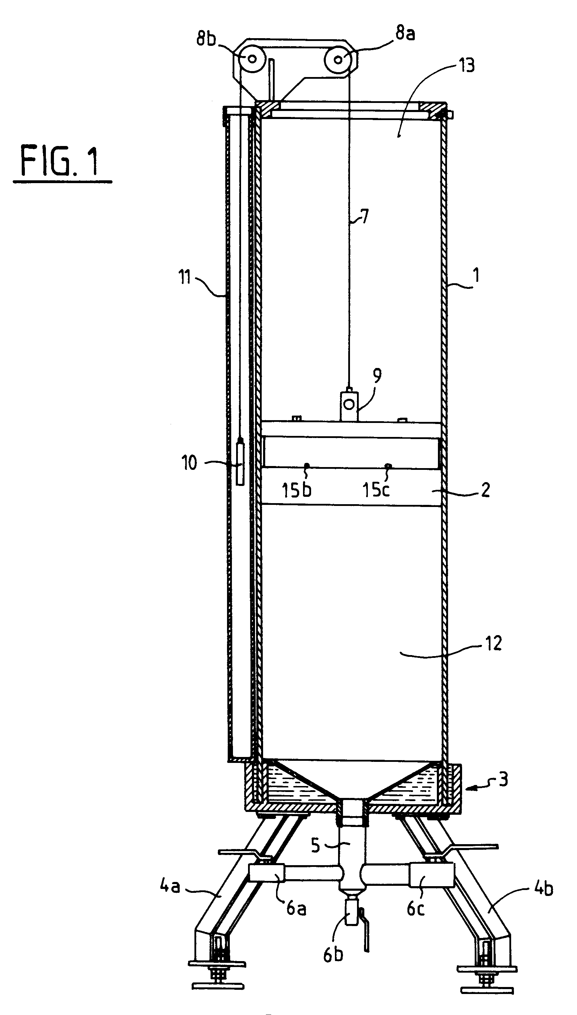

La figure 1 représente de façon générale une chambre étanche, dénommée "gazomètre", dont le volume intérieur, variable, est délimité par un cylindre vertical 1 et un piston 2 coulissant dans ce dernier.

La partie inférieure du cylindre est hermétiquement fermée par une embase 3 reposant sur le sol au moyen de pieds à hauteur réglable 4a, 4b, 4c, le dernier pied n'étant pas visible sur la figure.

L'embase 3 est percée d'un conduit 5 lui-même sélectivement ouvert ou obturé par une ou plusieurs vannes, telles que 6a, 6b 6c, pour le remplissage du gazomètre, la sortie du gaz stocké, en direction par exemple de compteurs de gaz à étalonner à pression constante, et la vidange du gazomètre.

L'extrémité supérieure du cylindre 1 est ouverte pour laisser passage à un câble 7 qui relie, en passant sur deux poulies 8a, 8b, un point d'ancrage supérieur 9 du piston 2 à un contrepoids 10 coulissant dans un guide vertical 11.

Le contrepoids 10 étant en fait plus léger que le piston 2, le gaz stocké dans le volume inférieur et intérieur 12 du gazomètre subit une pression supérieure à celle du gaz présent dans le volume extérieur 13, et présentant avec celle-ci une différence correspondant à la différence de poids entre le piston et le contrepoids, répartie sur toute la surface de la section du cylindre 1.

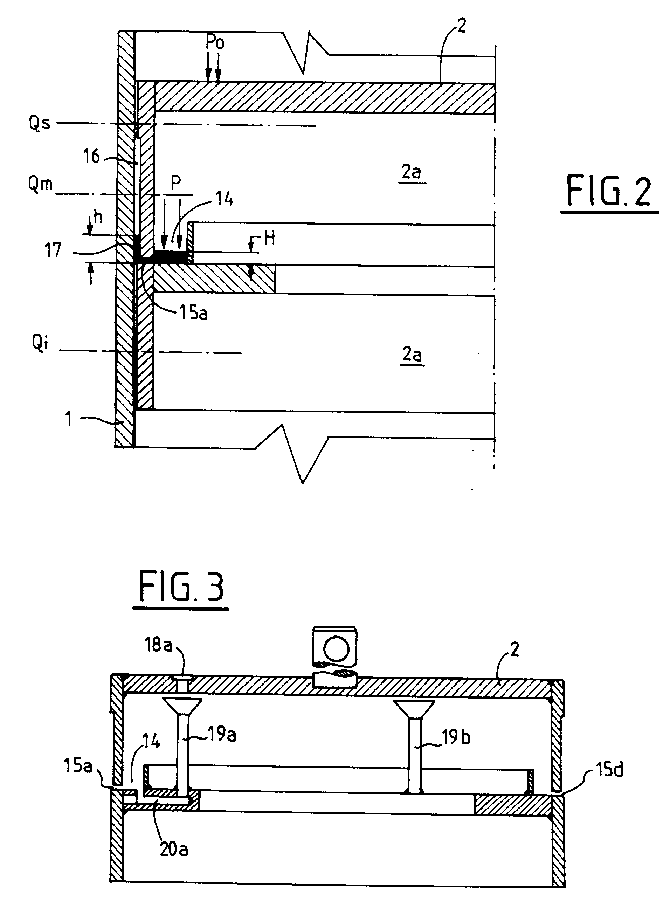

L'invention concernée, bien que notamment utilisable pour la réalisation du gazomètre de la figure 1, est plus spécifiquement illustrée sur la figure 2, sur laquelle sont à nouveau représentés, mais de façon partielle, le cylindre 1 et le piston 2.

Comme le montre cette figure, le piston 2 est creux et sa concavité 2a, qui est tournée vers le volume de gaz stocké 12 et en contient une partie, est soumise à la pression de ce volume de gaz.

Ce piston comporte un réservoir annulaire 14, lui aussi soumis à la pression P du volume de gaz 12, qui est logé dans la concavité 2a et qui contient un liquide 17, typiquement du mercure, propre à remplir le rôle de joint d'étanchéité.

Le réservoir 14 communique librement, grâce à des orifices traversant le piston, tels que 15a, 15b, 15c, 15d, avec un espace annulaire 16 formé entre le piston 1 et le cylindre 2.

De préférence, l'espace annulaire 16 est spécialement aménagé par une conformation de la périphérie externe du piston, pratiquée sur une partie médiane de la hauteur de ce dernier et selon laquelle, par conséquent, le diamètre du piston dans un plan Qm de cette partie médiane est inférieur au diamètre que présente le piston dans des plans supérieur et inférieur Qs et Qi, la différence étant par exemple de l'ordre de O.O4 centimètres.

Les orifices tels que 15a, 15b, 15c, par exemple au nombre de 6, sont régulièrement répartis sur la circonférence du piston et débouchent à la base de la partie médiane qui définit l'espace annulaire.

Grâce à cette disposition, le liquide 17 adopte, dans le réservoir 14 d'une part, et dans l'espace annulaire 16 d'autre part, des niveaux respectifs H et h dont la différence h-H est fonction de la différence P-Po des pressions P et Po régnant respectivement dans les premier et second volumes de gaz 12 et 13.

Avec une différence de 0.04 centimètres des diamètres Qm et Qi, la valeur maximale de h pour le mercure est de l'ordre de 1.63 centimètres.

Dans une réalisation industrielle du dispositif de l'invention, il peut être opportun, comme le montre la figure 3, de prévoir, sur la face supérieure du piston 2, des orifices de remplissage tels que 18a, qui sont hermétiquement bouchés après remplissage du réservoir 14, et qui communiquent avec ce dernier à travers un ou plusieurs entonnoirs tels que 19a, 19b, et à travers des conduits tels que 20a.

## Revendications

1. Dispositif pour séparer l'un de l'autre un premier et un second volumes de fluide (12, 13), comprenant un cylindre sensiblement vertical (1), un piston (2) et un joint, le piston coulissant dans le cylindre pour délimiter, avec une partie inférieure de ce dernier, ledit premier volume de fluide, et le joint comprenant un liquide (17) remplissant un espace annulaire (16) formé entre le piston et le cylindre, en vue d'assurer une étanchéité au niveau de cet espace, caractérisé en ce que le piston présente une concavité (2a) s'ouvrant sur le premier volume de fluide, et en ce que ce piston comporte au moins un réservoir (14) qui est soumis à la pression (P) de ce premier volume de fluide, qui est logé dans ladite concavité, qui contient le liquide d'étanchéité, et qui communique librement avec ledit espace annulaire grâce à des orifices (15a, 15b, 15c, 15d) traversant le piston, le liquide adoptant ainsi, dans le réservoir d'une part, et dans l'espace annulaire d'autre part, des niveaux respectifs (H, h) dont la différence (h-H) est fonction de la différence des pressions (P, Po) régnant respectivement dans les premier et second volumes de fluide.

2. Dispositif suivant la revendication 1, caractérisé en ce que ledit espace annulaire est spécialement aménagé par une conformation de la périphérie externe du piston, pratiquée sur une partie médiane de la hauteur de cette dernière, et en ce que lesdits orifices débouchent à la base de cette partie médiane.

3. Dispositif suivant la revendication 1 ou 2, caractérisé en ce que ledit liquide d'étanchéité est le mercure.

4. Dispositif suivant l'une quelconque des revendications précédentes, caractérisé en ce que ledit réservoir est annulaire et communique avec ledit espace annulaire à travers au moins deux orifices.

5. Application du dispositif suivant l'une quelconque des revendications précédentes à la réalisation d'un gazomètre.

## Patentansprüche

1. Vorrichtung zum Trennen eines ersten Fluidvolumens (12) von einem zweiten Fluidvolumen (13), mit einem im wesentlichen vertikalen Zylinder (1), einem Kolben (2) und einer Dichtung, wobei der Kolben im Zylinder gleitet, um mit einem unteren Abschnitt des Zylinders das erste Fluidvolumen abzugrenzen, und wobei die Dichtung eine Flüssigkeit (17) enthält, die einen ringförmigen Raum (16) erfüllt, der zwischen dem Kolben und dem Zylinder gebildet ist, um im Bereich dieses Raumes eine Dichtigkeit auszubilden, dadurch gekennzeichnet, daß der Kolben eine Vertiefung (2a) besitzt, die zum ersten Fluidvolumen geöffnet ist, und daß der Kolben wenigstens einen Vorratsbehälter (14) enthält, der dem Druck (P) des ersten Fluidvolumens ausgesetzt ist, der in der Vertiefung angeordnet ist, der die Dichtungsflüssigkeit enthält, und der mit dem ringförmigen Raum über den Kolben durchquerende Öffnungen (15a, 15b, 15c, 15d) frei in Verbindung steht, wobei die Flüssigkeit auf diese Weise zum einen im Vorratsbehälter und zum anderen im ringförmigen Raum entsprechende Höhen (H, h) annimmt, deren Unterschied (h-H) vom Unterschied zwischen den im ersten bzw. im zweiten Fluidvolumen herrschenden Drücken (P, Po) abhängt.

2. Vorrichtung nach Anspruch 1, dadurch gekennzeichnet, daß der ringförmige Raum durch eine Gestaltung des äußeren Umfangs des Kolbens speziell ausgebildet und in einem mittleren Abschnitt der Höhe des Kolbens angeordnet ist und daß die Öffnungen im unteren Bereich dieses mittleren Abschnitts münden.

3. Vorrichtung nach Anspruch 1 oder 2, dadurch gekennzeichnet, daß die Dichtungsflüssigkeit Quecksilber ist.

4. Vorrichtung nach einem der vorhergehenden Ansprüche, dadurch gekennzeichnet, daß der Vorratsbehälter ringförmig ist und mit dem ringförmigen Raum über wenigstens zwei Öffnungen in Verbindung steht.

5. Anwendung der Vorrichtung nach einem der vorhergehenden Ansprüche zur Ausbildung eines Gasbehälters.

## Claims

1. Apparatus for separating a first volume (12) of fluid from a second volume (13) of fluid, said apparatus comprising a substantially vertical cylinder (1), a piston (2) and a seal, the piston being slidably mounted inside the cylinder and cooperating with a bottom portion of the cylinder to delimit the first volume of fluid, the seal comprising a liquid (17) filling an annular space (16) formed between the piston and the cylinder, to provide fluid-tight sealing at this space, said apparatus being characterized in that the piston has a cavity (2a) opening out into the first volume of fluid, and in that the piston includes at least one reservoir (14) which is subjected to the pressure (P) of the first volume of fluid, which is housed in said cavity, which contains the sealing liquid, and which communicates freely with said annular space via through orifices (15a, 15b, 15c, 15d) in the piston, the liquid thereby taking up respective levels (H, h) firstly in the reservoir and secondly in the annular space, with the difference (h - H) between these respective levels being a function of the difference between the respective pressures (P, Po) in the first and second volumes of fluid.

2. Apparatus according to claim 1, characterized in that said annular space is specially provided in the outside periphery of the piston by shaping a middle portion of the height of the piston, and in that said orifices open out at the base of this middle portion.

3. Apparatus according to claim 1 or 2, characterized in that said sealing liquid is mercury.

4. Apparatus according to any preceding claim, characterized in that said reservoir is annular and communicates with said annular space via at least two orifices.

5. The application of apparatus according to any preceding claim, to making a gas holder.
